# EUROPÄISCHE PATENTSCHRIFT

(11) **EP 2 363 948 B1**
(45) Veröffentlichungstag und Bekanntmachung des Hinweises auf die Patenterteilung: **03.12.2014**
(21) Anmeldenummer: 10155176.0
(22) Anmeldetag: 02.03.2010
(51) Int. Cl.: H02P 27/08, H02P 27/12, H02M 7/5387

(54) **Verfahren zur Ermittlung der elektrischen Ständerdrehfeldfrequenz und/oder der Drehrichtung des Ständerdrehfeldes einer Synchron- oder Asynchronmaschine sowie zugehörige Vorrichtung und Synchron- oder Asynchronmaschine**
Method for determining the electric stator rotating field frequency and/or the rotation direction of the stator rotating field frequency of a synchronous or asynchronous machine and corresponding device and synchronous or asynchronous machine.
Procédé de détermination de la fréquence statorique de champ électromagnétique et/ou du sens de rotation du champ magnétique d'une machine synchrone ou asynchrone ainsi que dispositif correspondant et machine synchrone ou asynchrone

(43) Veröffentlichungstag der Anmeldung: 07.09.2011
(73) Patentinhaber: Baumüller Nürnberg GmbH, 90482 Nürnberg (DE)
(72) Erfinder: Villwock, Sebastian, 95701 Pechbrunn (DE); Zatocil, Heiko, 90429 Nürnberg (DE)
(74) Vertreter: Götz, Georg Alois

(56) Entgegenhaltungen:
- EP-A2- 0 959 553
- WO-A1-02/31952
- DE-A1- 19 530 622
- DE-A1- 19 612 988
- JP-A- 2007 312 546

## Beschreibung

Die Erfindung betrifft ein Verfahren zur Ermittlung der elektrischen Ständerdrehfeldfrequenz und/oder der Drehrichtung des Ständerdrehfeldes einer Synchron- oder Asynchronmaschine, die mittels einer Ansteuerschalteinrichtung mit wenigstens einem Schaltelement angesteuert wird. Des Weiteren betrifft die Erfindung eine Vorrichtung, die zu Ermittlung der elektrischen Ständerdrehfeldfrequenz und/oder der Drehrichtung des Ständerdrehfeldes einer Synchron- oder Asynchronmaschine ausgebildet ist, wobei die Synchron- oder Asynchronmaschine mittels einer Ansteuerschalteinrichtung mit wenigstens einem Schaltelement ansteuerbar ist, sowie eine entsprechende Synchron- oder Asynchronmaschine.

Wenn bisher für eine bzw. bei einer Synchron- oder Asynchronmaschine die Drehfrequenz und Drehrichtung des Ständerdrehfeldes bestimmt werden sollen, so erfolgt dies in der Regel so, dass die elektrische Frequenz innerhalb der Software der digitalen Signalprozessoren (DSP) der Maschine ermittelt wird. Es ist aber beispielsweise durchaus denkbar, dass bei der anschließenden (nach den digitalen Signalprozessoren erfolgenden) Pulsmustergenerierung Fehler auftreten. Diese werden bei einer Ermittlung der elektrischen Frequenz in der Software der digitalen Signalprozessoren (DSP-Software) nicht erkannt und können infolgedessen nicht berücksichtigt werden. Derartige Fehler können sowohl in der nachgeschalteten Software als auch in der Hardware auftreten.

Aus der DE 102 07 338 A1 sind ein Verfahren sowie eine Vorrichtung zur Erfassung der Motorposition eines Elektromotors bekannt. Der Motor gemäß diesem Dokument ist an eine Ansteuerschaltung angeschlossen, die eine der Anzahl der Motorwicklungen entsprechende Anzahl von Schalteranordnungen mit jeweils wenigstens einem Schalter und einem Ausgangsanschluss aufweist. Die Schalter der Schalteranordnungen leiten oder sperren nach Maßgabe von Ansteuersignalen, die einen ersten Pegel oder einen zweiten Pegel annehmen. Die Erfassung der Motorposition erfolgt durch Auswerten der Potenziale an den Anschlüssen des Motors, wobei die Potenziale an den Anschlüssen des Motors nur während vorgegebener Zeitperioden ausgewertet werden, deren zeitliche Lage und Dauer aus den Ansteuersignalen abgeleitet ist. Bei dieser Druckschrift geht es also darum, die Potenziale an den Motoranschlüssen in geeigneter Art und Weise beschränkt auf bestimmte Zeiten zu messen und auszuwerten.

Die US 7,126,301 B2 betrifft einen Motorantrieb, der eine Mehrzahl von Transistoren aufweist, die als Schalter dazu dienen, Motorwicklungen mit Strom zu versorgen. Des Weiteren ist ein Positionsdetektor vorgesehen, um, basierend auf der Anschlussspannung der jeweiligen Wicklung, die Rotationsposition des Rotors des Motors zu erkennen. Diese Art der Positionserkennung erfordert somit einen Detektor.Die DE 195 30 622 berechnet die Ständerfrequenz einer Drehfeldmaschine ausschließlich mittels der Austeuersignale des Umrichters, wobei ihre Schaltdauern ermittelt werden.

Der Erfindung liegt die Aufgabe zugrunde, ein gegenüber dem Stand der Technik verbessertes Verfahren der eingangs genannten Art sowie eine entsprechende Vorrichtung bzw. Synchron- oder Asynchronmaschine anzugeben.

Zur Lösung dieser Aufgabe ist zunächst ein Verfahren zur Ermittlung der elektrischen Ständerdrehfeldfrequenz und/oder der Drehrichtung des Ständerdrehfeldes einer Synchron- oder Asynchronmaschine, die mittels einer Ansteuerschalteinrichtung mit wenigstens einem Schaltelement angesteuert wird, vorgesehen, wobei sich das Verfahren durch die Merkmale des Anspruchs 1 auszeichnet.

Im Unterschied zu bisherigen Verfahren, bei denen die Frequenz lediglich innerhalb einer DSP-Software ermittelt wird, findet erfindungsgemäß die Ermittlung bzw. Bestimmung der Drehfeldfrequenz möglichst am Ende der Wirkungskette statt. Hierzu werden die Ansteuersignale der Schaltelemente der Ansteuerschalteinrichtung, also beispielsweise Ansteuersignale von Halbleiterbausteinen einer Ansteuerschalteinrichtung, ausgewertet. Die gemäß der Erfindung vorgesehene Lösung, bei der für die Ermittlung der Drehfrequenz bzw. Drehrichtung des Ständerdrehfeldes lediglich diese Ansteuersignale herangezogen werden, erfordert selbst keinen Sensor bzw. Detektor und kann dementsprechend, falls gewünscht, zur Plausibilisierung von Gebern verwendet werden. Weitere Signale als die Ansteuerimpulse für die Schaltelemente, die beispielsweise Halbleiterschaltelemente sein können, sind nicht erforderlich. Aus der gemäß der Erfindung ermittelten Umlauffrequenz des Ständerdrehfeldes und dessen Drehrichtung können gegebenenfalls Aussagen hinsichtlich der tatsächlichen Drehgeschwindigkeit bzw. Drehrichtung einer Drehfeldmaschine getätigt werden. Die erfindungsgemäße ausschließliche Berücksichtigung der Ansteuersignale der Schaltelemente für die Ansteuerschalteinrichtung empfiehlt sich insbesondere für Strategien zur Plausibilisierung, Zustandsüberwachung bzw. Diagnose im Zusammenhang mit dem Betrieb von Synchron- oder Asynchronmaschinen. Typische Ansteuerschalteinrichtungen weisen beispielsweise sechs Schaltelemente auf. Sie können als Pulswechselrichter mit sechs Schaltelementen ausgebildet sein. Das Verfahren kann bei unterschiedlichen Anwendungen im Maschinenbau eingesetzt werden, so z.B. im Walzwerksbau, in der Druck-, Verpackungs- und Textilindustrie, der Robotik im Bereich General Motion usw.

Zum technischen Hintergrund der vorliegenden Erfindung wird auf die Dissertation von Heiko Zatocil, "Geberlose Drehzahlregelung der Asynchronmaschine mit einem testsignalbasierten Referenzmodell", Universität Erlangen-Nürnberg, 2009, verwiesen. Außerdem zu nennen ist die Publikation Joachim Holtz, "Pulsewidth Modulation for Electronic Power Conversion", Proceedings of the IEEE, Vol. 82, No. 8, August 1994, pp. 1194-1214, die Publikation Jens-Onno Krah, Joachim Holtz, "High-Performance Current Regulation and Efficient PWM Implementation for Low Inductance Servo Motors", IEEE Transactions on Industry Applications, Vol. 35, No. 5, Sept/Oct 1999, pp. 1039-1049, sowie die Publikation D.G. Holmes, T.A. Lipo: "Pulse Width Modulation for Power Converters", Piscataway, IEEE Press, 2003, und F. Jenny, D. Wüest: "Steuerverfahren für selbstgeführte Stromrichter", Zürich, VDF-Hochschulverlag an der ETH Zürich, 1995.

Die Ansteuersignale für das eine oder die mehreren Schaltelemente können seitens einer Ansteuerelektronik erzeugt und/oder unter Verwendung eines Modells mit wenigstens einem Spannungsraumzeiger und/oder wenigstens einem resultierenden Sollspannungsraumzeiger ausgewertet bzw. ermittelt werden.

Die Schaltelementansteuersignale können seitens einer Ansteuerelektronik, die den Schaltelementen der bzw. der Ansteuerschalteinrichtung vorgeschaltet ist, erzeugt werden. Die Ansteuerelektronik kann Teil der Ansteuerschalteinrichtung sein. Die Ermittlung bzw. Auswertung der Ansteuersignale, beispielsweise der Halbleiterschaltelementsteuersignale, zur Frequenz- bzw. Drehrichtungsbestimmung für das Ständerdrehfeld kann unter Verwendung wenigstens eines Spannungsraumzeigers bzw. eines sich aus verschiedenen, für die Sektoren der Spannungsraumdarstellung definierten Statorspannungsraumzeigern ergebenden resultierenden Sollspannungsraumzeigers (der in diesem Sinne einen Gesamtspannungsraumzeiger bildet) erfolgen. Die Ansteuersignale beispielsweise für die Halbleiterschalter lassen sich somit in einer Weiterbildung der Erfindung aus dem Sollspannungsraumzeiger ableiten bzw. anhand dieses Zeigers und/oder einer entsprechenden Raumzeigerdarstellung nachvollziehen und/oder ermitteln. Zur Beschreibung des Verhaltens von Synchron- bzw. Asynchronmaschinen durch Raumzeiger/Raumzeigerdarstellungen wird beispielsweise auf die bereits erwähnte Dissertation von Dr.-Ing. H. Zatocil verwiesen.

Der oder die Spannungsraumzeiger und/oder der resultierende Sollspannungsraumzeiger bzw. die zugehörige Spannungsraumzeigerdarstellung können im Rahmen einer Stromregelung und/oder einer Spannungs-/Frequenzsteuerung (U/f-Steuerung) ermittelt werden. Die Sollspannungsraumzeiger sind somit z.B. ein Resultat einer für das System der Maschine durchgeführten bzw. für diese implementierten Stromregelung, können aber auch auf andere Arten erzeugt werden.

Als wenigstens ein Schaltelement der Ansteuerschalteinrichtung kann ein Halbleiterschaltelement verwendet werden, oder es können ausschließlich Halbleiterschaltelemente als Schaltelemente der Ansteuerschalteinrichtung verwendet werden, insbesondere Bipolartransistoren mit isolierter Gate-Elektrode (sogenannte insulated gate bipolar transistors, IGBTs).

Werden Ansteuerschalteinrichtungen ausschließlich mit IGBTs als Schaltelementen verwendet, so bedeutet dies, dass die elektrische Ständerdrehfeldfrequenz bzw. die Drehrichtung des Ständerdrehfeldes erfindungsgemäß alleine anhand der Ansteuersignale der IGBTs bestimmt wird. Die Ansteuersignale der IGBTs ergeben sich dann wie bereits beschrieben anhand der Sollspannungsraumzeiger, die ihrerseits auf die Stromregelung bzw. auf eine Spannungs-Frequenz-Steuerung (U/f-Steuerung) zurückgehen oder anderswie erzeugt werden.

Selbstverständlich können anstelle von IGBTs auch andere Halbleiterschaltelemente bzw. unterschiedliche Halbleiterschaltelemente in einer Ansteuerschalteinrichtung miteinander kombiniert verwendet werden. Die Art der Auswertung der Ansteuersignale dieser Halbleiterschaltelemente bzw. der unterschiedlichen Schaltelemente der Ansteuerschalteinrichtung müsste dann gegebenenfalls geeignet angepasst werden, um die Drehfeldfrequenz bzw. Drehrichtung des Ständerdrehfeldes und auf dieser Basis gegebenenfalls auch der Maschine weiterhin zuverlässig ermitteln zu können.

Als Ansteuerschalteinrichtung kann ein bzw. wenigstens ein Wechselrichter verwendet werden, insbesondere ein dreiphasiger Wechselrichter und/oder ein Pulswechselrichter und/oder ein Wechselrichter mit Bipolartransistoren mit isolierter Gate-Elektrode und jeweils zugeordneten Freilaufdioden und/oder ein Zweipunktwechselrichter und/oder ein von einem Gleichspannungszwischenkreis gespeister und/oder eine dreiphasige Last antreibender Wechselrichter.

Mit besonderem Vorteil geht das Verfahren zur Ermittlung der Drehfeldfrequenz bzw. Drehrichtung des Ständerdrehfeldes von einer Ansteuerschalteinrichtung aus, die von einem dreiphasigen Wechselrichter mit sechs IGBTs und sechs Freilaufdioden, die jeweils den IGBTs zugeordnet sind, gebildet wird. Diese Schaltung kann von einem Gleichspannungszwischenkreis gespeist werden. Angeschlossen an den Wechselrichter ist eine dreiphasige Last, also eine dreiphasige Asynchron- bzw. Synchronmaschine.

Im Rahmen der Ermittlung der elektrischen Ständerdrehfeldfrequenz und/oder der Drehrichtung des Ständerdrehfeldes der Synchron- und/oder Asynchronmaschine kann, insbesondere im Fall eines Zweipunktwechselrichters mit sechs Sektoren in einer Sollspannungsraumzeigerdarstellung als Ansteuerschalteinrichtung, die Periodendauer zur bzw. der Ständerdrehfeldfrequenz (die Periodendauer ergibt sich aus der Bildung des Kehrwerts des Ständerdehfeldfrequenz) mittels einer Schaltgeraden bestimmt werden, die Bereiche in einer Sollspannungsraumzeigerdarstellung trennt, in denen jeweils einer von zwei um 180 Grad entgegen gesetzten (in um 180 Grad unterschiedliche Richtungen weisenden) Spannungsraumzeigern zur Bildung eines resultierenden Sollspannungsraumzeigers aktiv wird. Die Schaltgerade wird also so gezogen, dass sie das Einsetzen der Beteiligung jeweils eines der beiden Zeiger an der Bildung des Gesamtzeigers markiert.

Es werden also beispielsweise bei Vorliegen eines Zweipunktwechselrichters, für den sechs Sektoren in der Sollspannungsraumzeigerdarstellung definiert werden können, zwei Paare aus jeweils drei nebeneinander liegenden Sektoren betrachtet, die durch die Schaltgerade getrennt werden. Geschaltet wird jeweils beim Aktivwerden eines der beiden Spannungsraumzeiger, die genau um 180 Grad entgegen gesetzt verlaufen. Diese beiden Spannungsraumzeiger sind jeweils in zwei nebeneinander liegenden Sektoren an der Bildung des Gesamtsollspannungsraumzeigers beteiligt.

Bei entsprechender Bezeichnung der Sektoren mit römischen Zahlen können zwei derart nebeneinander liegende Sektoren einerseits die beiden aneinander grenzenden Sektoren I und VI sein, in denen der Zeiger 1 an der Bildung des Sollspannungsraumzeigers beteiligt ist, andererseits die beiden Sektoren III und IV, die ebenfalls nebeneinander liegen und in denen der Zeiger 4 an der Spannungsbildung beteiligt ist. Ausgehend von den Überlegungen zur Beteiligung dieser entgegengesetzt verlaufenden Zeiger 1 und 4 an der Spannungsbildung kann eine Schaltgerade definiert werden, die die beiden Bereiche trennt, in denen einerseits der erste Zeiger, andererseits der zweite Zeiger aktiv werden. Die Schaltgerade verläuft somit auf der Grenze zwischen den Sektoren V und VI einerseits (im Sektor VI setzt die Beteiligung des ersten Zeigers 1 ein) und den Sektoren II und III andererseits (im Sektor III wird der Zeiger 4 aktiv). Die Grenze zwischen den Sektoren V und VI steht für das Aktivwerden des Zeigers 1 zur Spannungsbildung, die Grenze zwischen den Sektoren II und III für das Aktivwerden des Zeigers 4. Ob die jeweiligen Zeiger 1 bzw. 4 bzw. andere Paare von um 180 Grad entgegengesetzt liegenden Spannungsraumzeigern an der Spannungsbildung beteiligt sind, kann anhand der Schaltzustände der IGBTs abgefragt werden.

Jeweils bei Beginn der Beteiligung des einen Spannungsraumzeigers an der Bildung des resultierenden Sollspannungsraumzeigers kann ein Speicher gesetzt werden, der zurückgesetzt wird, wenn die Beteiligung des um 180 Grad entgegen gesetzt verlaufenden Spannungsraumzeigers einsetzt.

Handelt es sich bei den beiden entgegen gesetzten Spannungsraumzeigern um die Zeiger 1 und 4, so wird immer dann, wenn Zeiger 1 aktiv wird, ein Speicher gesetzt, und wenn anschließend Zeiger 4 aktiv wird, wird dieser Speicher zurückgesetzt. Die Bereiche, in denen jeweils der eine bzw. der andere Zeiger aktiv wird (und in jeweils zwei der drei Sektoren des Bereichs an der Spannungsbildung beteiligt bleibt), werden durch die Schaltgerade getrennt. Die Schaltgerade verdeutlicht, dass bei einer Ständerfrequenz f₁ = konstant alle 180 Grad der Speicher gesetzt bzw. zurückgesetzt wird.

Die Beteiligung der beiden entgegen gesetzten Spannungsraumzeiger an der Bildung des resultierenden Sollspannungsraumzeigers kann mittels der Schaltzustände der Schaltelemente der Ansteuerschalteinrichtung, insbesondere des Zweipunktwechselrichters, ermittelt werden, wobei die Bedingungen zum Setzen und Zurücksetzen des Speichers logikbasiert ermittelt werden.

Die Bedingungen zum Setzen und Zurücksetzen werden somit durch eine Logik gebildet bzw. deren Vorhandensein oder Nichtvorhandensein wird durch eine Logikschaltung ermittelt, wobei die unmittelbare Auswertung der Schaltsignale durch &-Gatter (Und-Gatter) dargestellt werden bzw. erfolgen kann. Damit ergibt sich ein charakteristischer periodischer Signalverlauf, der aus dem Überschreiten der Schaltgeraden durch den Sollspannungsraumzeiger U* folgt. Die Periodendauer T₁, die sich durch die Betrachtung der Schaltgeraden ergibt, entspricht der Periodendauer zur Ständerdrehfeldfrequenz.

Die Drehrichtung des Ständerdrehfeldes kann, insbesondere im Fall eines Zweipunktwechselrichters mit sechs Sektoren im Sollspannungsraum als Ansteuerschalteinrichtung, mittels wenigstens einer, insbesondere wenigstens einer weiteren, Schaltgeraden im Sollspannungsraum bestimmt werden, insbesondere mittels einer weiteren Schaltgeraden, die gegenüber einer Schaltgeraden zur Bestimmung der Periodendauer des Ständerdrehfelds um 60 Grad oder 120 Grad verschoben ist.

Wird also wie vorab beschrieben die Periodendauer zur Ständerdrehfeldfrequenz durch die Betrachtung einer Schaltgeraden in der Sollspannungsraumzeigerdarstellung bestimmt, so muss anschließend zur Erkennung der Drehrichtung des Ständerdrehfeldes ein zweites Signal gewonnen und ausgewertet werden. Dazu kann beispielsweise, wenn zunächst zur Bestimmung der Periodendauer auf die Zeiger 1 und 4 abgestellt wurde, auf die Zeiger 2 und 5 zurückgegriffen werden, wobei Zeiger 2 die Sektoren I und II voneinander trennt und Zeiger 5 die Sektoren IV und V. Die zugehörige Schaltgerade ist um 60 Grad gegenüber der ersten Schaltgeraden gedreht. Ein entsprechend, analog zum zuvor für die Zeiger 1 und 4 beschriebenen Vorgehen, abgeleitetes rechteckförmiges Zeitsignal bzw. Binärsignal wäre um 60 Grad in der Phase verschoben gegenüber dem Signal, das zur Bestimmung der Periodendauer verwendet wurde. Die Ableitung bzw. Auswertung dieses zweiten Signals kann wie zuvor beschrieben anhand der Beteiligung bzw. des Aktivwerdens der jeweiligen Zeiger erfolgen. Wiederum kann durch Setzen und Zurücksetzen eines Speichers logikbasiert vorgegangen werden.

Die Betrachtung der jeweiligen Schaltgeraden ermöglicht somit die Gewinnung von Rechtecksignalen bzw. Rechteckimpulsen, wobei jeweils beim Aktivwerden des einen Zeigers ein Speicher gesetzt wird und beim Aktivwerden des entgegen gesetzten Zeigers dieser Speicher wieder zurückgesetzt wird, so dass das Aktivwerden des ersten Zeigers dem Einsetzen des Rechteckpulses entspricht und das Aktivwerden des zweiten Zeigers dem Ende des Rechteckpulses.

Die Betrachtung der Sektoren, in den die Zeiger 3 und 6 aktiv sind, also im Fall des Zweipunktwechselrichters für den Zeiger 3 der Sektoren II und III sowie für den Zeiger 6 der Sektoren V und VI, bzw. der Schaltgeraden, die das Aktivwerden der Zeiger 3 bzw. 6 anzeigt, liefert ein drittes Signal, das wiederum um 60 Grad gegenüber dem der Kombination der Zeiger 2 und 5 zugeordneten Rechtecksignal und um 120 Grad gegenüber dem Signal der Kombination der Zeiger 1 und 4 verschoben ist. Die Auswertung kann wie bereits beschrieben logikbasiert unter Einführung von &-Gattern erfolgen. Durch die Verschiebung von 60 Grad zwischen den jeweiligen Signalen sind die Voraussetzungen für eine Drehrichtungserkennung unmittelbar gegeben.

Die Ständerdrehfeldfrequenz des elektrischen Feldes kann, insbesondere im Fall eines Zweipunktwechselrichters mit sechs Sektoren in einer Sollspannungsraumzeigerdarstellung als Ansteuerschalteinrichtung, mittels Zählung der Flanken der sich durch das Überschreiten einer Schaltgeraden durch den resultierenden Sollspannungsraumzeiger ergebenden Rechtecksignale bzw. Binärsignale innerhalb eines festen Zeitintervalls und/oder durch Zeitmessung zwischen zwei Flanken der sich durch das Überschreiten einer Schaltgeraden durch den resultierenden Sollspannungsraumzeiger ergebenden Rechteck-/Binärsignale ermittelt werden.

Diese beiden Verfahren können alternativ oder auch zu Kontrollzwecken in Ergänzung bzw. Kombination miteinander verwendet werden. Falls diese beiden Herangehensweisen zur Ermittlung der Frequenz alternativ verwendet werden, so empfiehlt sich die Zählung der Flanken der drei erzeugten Rechtecksignale innerhalb eines festen Zeitintervalls besonders bei höheren Drehzahlen der Synchron- bzw. Asynchronmaschine, während die Zeitmessung zwischen zwei Flanken der drei erzeugten Rechtecksignale (entsprechend 60 Grad elektrisch) bei niedrigeren Drehzahlen zu bevorzugen ist.

Im Fall eines Zweipunktwechselrichters mit sechs Sektoren in einer Sollspannungsraumzeigerdarstellung als Ansteuerschalteinrichtung können gegebenenfalls alle drei sich durch Überschreiten der jeweiligen Schaltgeraden durch den resultierenden Sollspannungsraumzeiger ergebenden Rechtecksignale zur Ermittlung der Frequenz des elektrischen Feldes verwendet werden. Eine solche Betrachtung aller drei generierten Binärsignale liefert alle 60 Grad eine Information. Die Berücksichtigung eines einzigen Signals würde hingegen nur alle 180 Grad eine Information liefern, so dass durch die Verwendung aller drei Signale eine Verdreifachung der Auflösung erzielt wird. Bei entsprechend anders ausgebildeten Ansteuerschalteinrichtungen können selbstverständlich in entsprechender Art und Weise vergleichbare Binärsignale generiert und ausgewertet werden. Eine Auswertung aller bzw. mehrerer vorliegender Signale würde wiederum zu einer Erhöhung der Auflösung führen.

Weiterhin kann im Rahmen des Verfahrens zur Ermittlung der elektrischen Ständerdrehfeldfrequenz und/oder der Drehrichtung des Ständerdrehfeldes einer Synchron- oder Asynchronmaschine eine in der Ansteuerschalteinrichtung, insbesondere der Ansteuerlogik entsprechender Leistungshablleiter, implementierte Verriegelungszeit berücksichtigt werden. Eine beispielsweise in dem bzw. den Umrichtern implementierte Verriegelungszeit stellt eine Totzeit im System dar, die in die Überlegungen einbezogen werden sollte. Die Verriegelungszeit sorgt dafür, dass in einem Zweig beispielsweise eines Pulswechselrichters als Ansteuerschalteinrichtung niemals beide Halbleiterschalter, beispielsweise beide Transistoren, gleichzeitig eingeschaltet sind und sich damit in einem leitenden Zustand befinden. Beim Ausschalten eines Schaltelements, beispielsweise eines IGBTs bzw. Transistors, in einem Zweig der Ansteuerung wird der weitere Schalter in diesem Zweig nicht sofort eingeschaltet, wie es rein theoretische Überlegungen erfordern, sondern das Einschalten wird verspätet durchgeführt. Zur genaueren Beschreibung der Totzeit bzw. einer Totzeitkompensation wird auf die erwähnte Dissertation von Dr.-Ing. H. Zatocil verwiesen.

Die in der Ansteuerlogik der Leistungshalbleiter implementierte Verriegelungszeit führt dazu, dass bei der Detektion der Ansteuersignale Schaltmuster auftreten, die von der beschriebenen Logikschaltung nicht detektiert werden können. Typische Verriegelungszeiten können bei einigen Mikrosekunden (µs), beispielsweise bei vier Mikrosekunden, liegen. Ausgehend von einer Theorie ohne Totzeiteffekte bzw. Verriegelungszeiten wäre es nicht möglich, dass beide Halbleiterschaltelemente, beispielsweise beide Transistoren oder IGBTs, eines Zweigs gleichzeitig ausgeschaltet wären. Im Rahmen einer solchen Theorie müsste im Moment des Ausschaltens des einen Schaltelements, beispielsweise des einen Transistors, der andere Transistor im selben Zweig ohne Totzeiteffekt (sofort) eingeschaltet werden. Diesen theoretischen Anforderungen kann Rechnung getragen werden, indem bei der Signalauswertung eine Korrektur vorgenommen wird, wonach bei Ausschalten des einen Schaltelements im jeweiligen Zweig das Logiksignal für das andere Schaltelement in diesem Zweig automatisch auf HIGH gesetzt wird. Bei anderen Ansteuerschalteinrichtungen mit abweichenden Anzahlen von Schaltelementen und Zweigen wäre die Auswertung in analoger Weise anzupassen.

Der Messwert des Ansteuersignals würde dagegen erst nach dem Ablauf der Totzeit den Zustand HIGH annehmen, so dass der Ablauf zur Drehfeldfrequenzbestimmung gestört würde. Die beschriebene Rekonstruktion des Pulsmusters, das im Fall ohne Verriegelung gültig wäre, dient somit ausschließlich der Durchführung des erfindungsgemäßen Verfahrens bzw. der Ständerdrehfeldfrequenzermittlung bzw. -drehrichtungsermittlung. Die so rekonstruierten Pulsmustersignale dürfen nicht über die Treiber an das Leistungsteil herausgegeben werden. Für das Realsystem soll ja die über die Implementierung der Totzeiten geschaffene zusätzliche Sicherheit erhalten bleiben.

Die elektrische Ständerdrehfeldfrequenz und/oder die Drehrichtung des Ständerdrehfeldes der Synchron- oder Asynchronmaschine können im stationären Zustand und/oder zur Überprüfung und/oder Plausibilisierung der Signale wenigstens eines Sensor- und/oder Geberelements ermittelt werden.

Das beschriebene Verfahren eignet sich vorrangig für den Betrieb bzw. die Frequenz- und/oder Drehrichtungsbestimmung des Ständerdrehfelds des Antriebs im stationären Zustand, weniger für transiente Vorgänge. Das erfindungsgemäße Verfahren kann dazu dienen, die Messwerte von Gebern zu plausibilisieren. Es handelt sich um ein geberloses Verfahren zur Drehfeldfrequenzermittlung bzw. -drehrichtungsermittlung, das in unterschiedlichen Zusammenhängen beispielsweise für Zwecke der Zustandsüberwachung bzw. Diagnose eingesetzt werden kann.

Darüber hinaus betrifft die Erfindung eine Vorrichtung, die zur Ermittlung der elektrischen Ständerdrehfeldfrequenz und/oder der Drehrichtung des Ständerdrehfelds einer Synchron- oder Asynchronmaschine ausgebildet ist, wobei die Synchron- oder Asynchronmaschine mittels einer Ansteuerschalteinrichtung mit wenigstens einem Schaltelement ansteuerbar ist, insbesondere eine Vorrichtung, die zur Ermittlung der elektrischen Ständerdrehfeldfrequenz und/oder der Drehrichtung des Ständerdrehfeldes gemäß einem Verfahren wie vorstehend geschildert ausgebildet ist, wobei die Vorrichtung durch die Merkmale des Anspruchs 13 gekennzeichnet ist.

Die Ständerdrehfeldfrequenz- bzw. Ständerdrehfelddrehrichtungsermittlungsvorrichtung kann ein separates Bauteil bzw. eine separate Komponente sein (sowohl bei hardwaremäßiger als auch bei softwaremäßiger Betrachtung). Es ist aber ebenso denkbar, dass die Vorrichtung in eine Ansteuerschalteinrichtung bzw. Ansteuerelektronik oder eine oder mehrere bereits vorhandene Komponenten der Maschinensteuerung integriert bzw. an diese angebunden ist. Die Vorrichtung weist dementsprechend Auswertemittel auf, beispielsweise eine Logikschaltung. Die Auswertemittel können wie bereits beschrieben dazu dienen, die sich bei Überschreiten einer oder mehrerer Schaltgeraden in einer Sollspannungsraumzeigerdarstellung, beispielsweise einer Darstellung mit sechs Sektoren im Fall eines Zweipunktwechselrichters, ergebenden binären Signale bzw. Rechtecksignale zur Ermittlung der Periodendauer zur Ständerdrehfeldfrequenz (also der Periodendauer, die dem Kehrwert der Ständerdrehfeldfrequenz entspricht und in diesem Sinne der Ständerdrehfeldfrequenz entspricht), der Drehrichtung bzw. der Frequenz des Ständerdrehfeldes auszuwerten.

Darüber hinaus betrifft die Erfindung eine Synchron- oder Asynchronmaschine, die sich dadurch auszeichnet, dass ihr eine Vorrichtung zur Ermittlung der elektrischen Ständerdrehfeldfrequenz bzw. -drehrichtung wie vorstehend geschildert zugeordnet ist. Diese Vorrichtung kann ein Teil der Maschine bzw., wie bereits geschildert, der Ansteuerschalteinrichtung bzw. Ansteuerelektronik sein. Bei einer solchen Synchron- bzw. Asynchronmaschine besteht dann die Möglichkeit zur Ermittlung der Umlauffrequenz des Ständerdrehfeldes bzw. von dessen Drehrichtung alleine ausgehend von den Ansteuersignalen für die IGBTs bzw. den Ansteuersignalen für andere Schaltelemente der Ansteuerschalteinrichtung der Synchron- bzw. Asynchronmaschine.

Weitere Vorteile, Merkmale und Einzelheiten der Erfindung ergeben sich anhand der folgenden Ausführungsbeispiele sowie aus den Zeichnungen. Dabei zeigen:

Figur 1 ein Prinzipschaltbild einer Ansteuerschalteinrichtung in Form eines Pulswechselrichters,

Figur 2 eine Darstellung der Spannungsraumzeiger und Sektoren für einen Zweipunktwechselrichter, insbesondere gemäß Figur 1,

Figur 3 eine Tabelle der je Sektor der Figur 2 verwendeten Spannungsraumzeiger,

Figur 4 eine Tabelle der Schaltzustände der IGBTs der Figur 1 für die Aktivzeiger 1 bis 6 und die sogenannten Nullzeiger 7 und 8 gemäß Figur 2,

Figur 5 eine Darstellung zur Beteiligung der Spannungsraumzeiger 1 und 4 an der Bildung des Sollspannungsraumzeigers,

Figur 6 eine Darstellung zur logikbasierten Auswertung der Ansteuersignale für die IGBTs gemäß Figur 1 im Rahmen des erfindungsgemäßen Verfahrens,

Figur 7 eine Darstellung des sich aus dem Überschreiten der Schaltgeraden zu den Zeigern 1 und 4 durch den resultierenden Sollspannungsraumzeiger U* ergebenden Ansteuersignalverlaufs,

Figuren 8 und 9 Darstellungen der logikbasierten Auswertung der Ansteuersignale bei Abfrage einerseits der Zeiger 2 und 5, andererseits der Zeiger 3 und 6,

Figur 10 eine Darstellung der drei gemäß Figur 6, 8 und 9 ermittelten phasenverschobenen binären Ansteuersignale und

Figur 11 eine Darstellung zur im Rahmen der Erfindung zu berücksichtigen Verriegelungszeit.

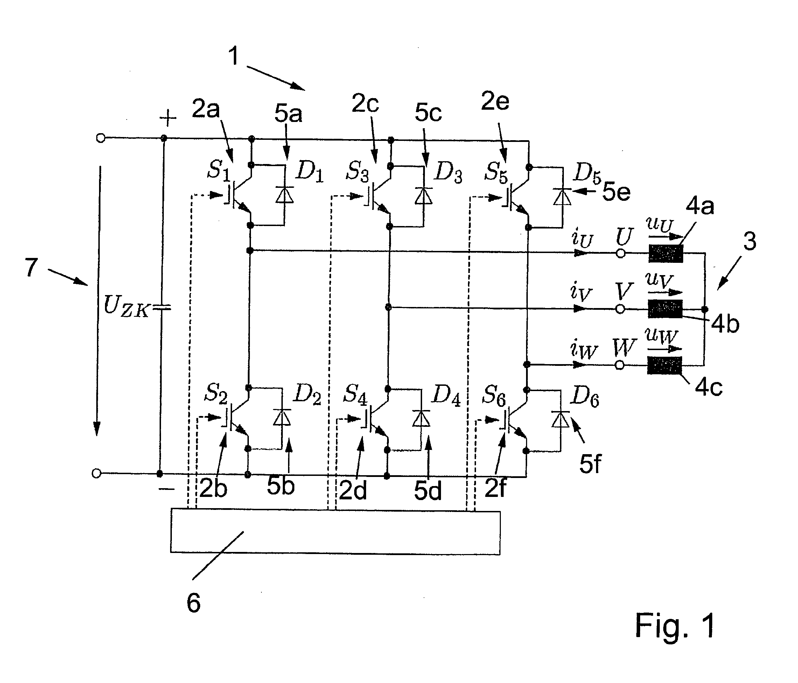

In der Figur 1 ist ein Prinzipschaltbild einer Ansteuerschalteinrichtung 1 in Form eines Pulswechselrichters gezeigt. Die Ansteuerschalteinrichtung 1 in Form eines dreiphasigen Wechselrichters mit sechs (Halbleiter-) Schaltelementen 2a - 2f, hier den IGBTs 2a - 2f, dient zum Antrieb einer Dreiphasenlast in Form einer Asynchron- bzw. Synchronmaschine 3. Die Ansteuerschalteinrichtung 1 ist an die Motorwicklungen 4a, 4b, 4c angeschlossen, wobei i_{U}, iᵥ und i_{w} die jeweiligen Ströme und U, V und W die Spannungen an den Anschlüssen der Synchron- bzw. Asynchronmaschine 3 bezeichnen. Die den Wicklungen 4a, 4b, 4c zuzuordnenden Spannungen sind zeitlich veränderlich und werden in der vorliegenden Darstellung mit u_{U}, uᵥ und u_{w} bezeichnet.

Die Ansteuerschalteinrichtung 1 weist zu jedem der IGBTs 2a - 2f (S1 bis S6) eine zugeordnete Freilaufdiode 5a - 5f (D1 bis D6) auf. Die Ansteuerschalteinrichtung 1 erhält Signale einer Ansteuerelektronik 6 und wird von einem Gleichspannungszwischenkreis 7 gespeist. Die Spannung des Zwischenkreises 7 ist mit U_{ZK} bezeichnet. Beim erfindungsgemäßen Verfahren werden lediglich die Ansteuersignale für die IGBTs 2a - 2f verwendet, um ausschließlich anhand dieser Ansteuersignale die Ständerdrehfeldfrequenz bzw. Drehrichtung des Ständerdrehfeldes der Synchron- oder Asynchronmaschine 3 zu ermitteln.

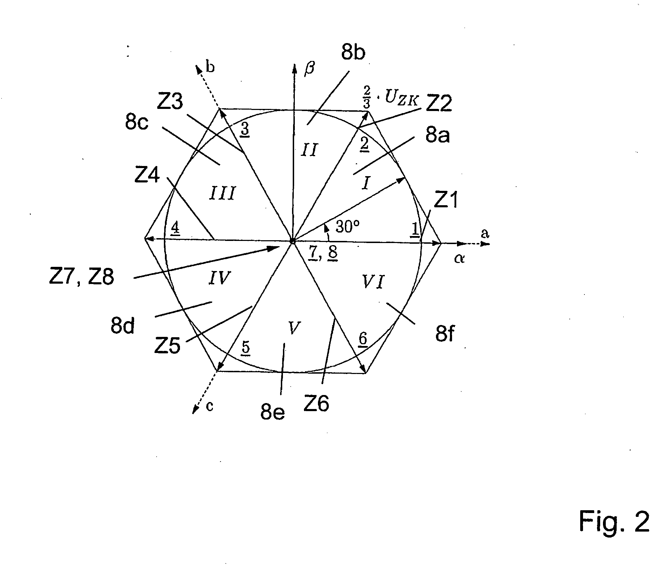

Die Figur 2 zeigt zur Erläuterung eines erfindungsgemäßen Vorgehens eine Darstellung der Spannungsraumzeiger 1, 2, 3, ... ,7 und 8 (hier mit den Bezugszeichen Z1, Z2, Z3, Z4, Z5, Z6, Z7, Z8) und der zuzuordnenden Sektoren I - VI (hier mit den Bezugszeichen 8a, 8b, 8c, 8d, 8e, 8f) für einen Zweipunktwechselrichter beispielsweise gemäß der Figur 1. Die Achsen α und β bezeichnen die Achsen des Stator- bzw. Ständerkoordinatensystems. Daneben sind die Raumachsen a, b und c dargestellt. Der Betrag des Spannungsraumzeigers 2 entspricht 2/3 des Betrags der Zwischenkreisspannung, U_{ZK}. Dies gilt ebenso für die anderen Aktivzeiger 1, 2, 3,..., 6.

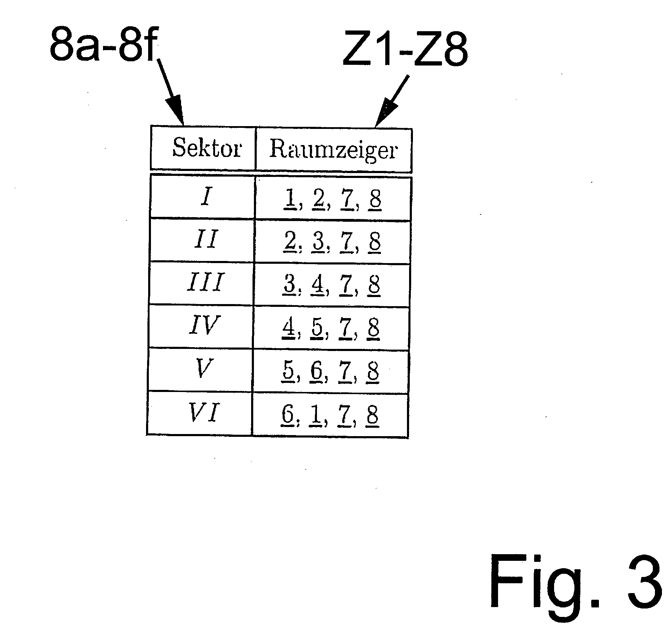

In der Figur 3 ist eine Tabelle der je Sektor I bis VI der Figur 2 verwendeten Spannungsraumzeiger 1 bis 8 gezeigt. Dabei stellen die Zeiger 1 bis 6 die sogenannten Aktivzeiger dar, während die Zeiger 7 und 8 die sogenannten Nullzeiger bilden. Aus der Tabelle ist ersichtlich, dass dem Sektor I (8a) die Raumzeiger 1, 2, 7, 8 (Z1, Z2, Z7, Z8) zugeordnet sind, dem Sektor II (8b) die Zeiger 2, 3, 7 und 8 (Z2, Z3, Z7, Z8) usw.

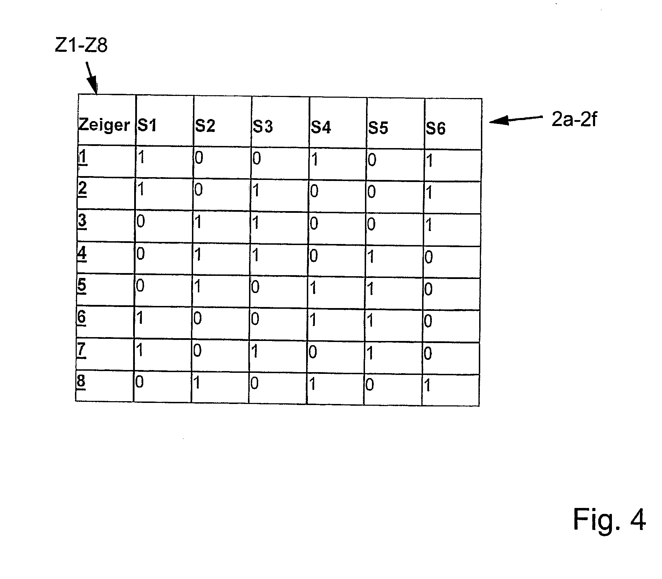

Die Figur 4 zeigt eine Tabelle der Schaltzustände der IGBTs der Figur 1 für die Aktivzeiger 1 bis 6 (Z1 bis Z6) und die sogenannten Nullzeiger 7 und 8 (Z7 und Z8). Mit S1, S2 bis S6 sind dabei die IGBTs 2a, 2b bis 2f der Figur 1 bezeichnet. Für jeden der Zeiger 1 bis 8 ist jeweils der Schaltzustand aller IGBTs S1 - S6 in binärer Form, mit den Werten 0 bzw. 1, dargestellt.

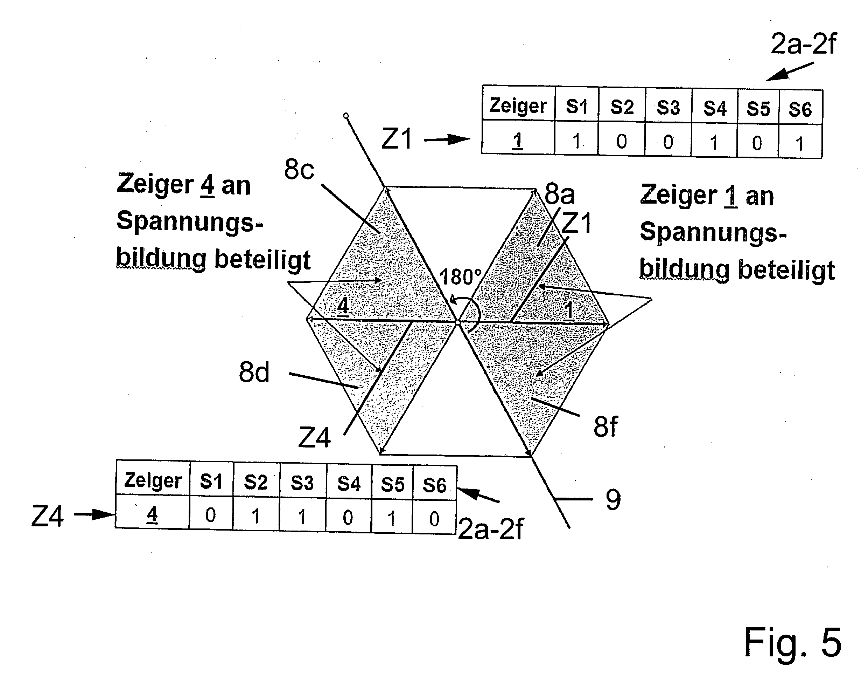

In der Figur 5 ist eine Darstellung zur Beteiligung der Spannungsraumzeiger 1 (Z1) und 4 (Z4) an der Bildung des resultierenden Sollspannungsraumzeigers gezeigt. In den beiden Sektoren 8c und 8d (III und IV) ist der Zeiger Z4 an der Spannungsbildung beteiligt, in den beiden Sektoren 8a und 8f (1 bzw. VI) der Zeiger Z1. Diese Sektorenbereiche (die Bereiche der Sektoren 8c, 8d, 8a, 8f) sind in der Figur 5 dunkler dargestellt. Die jeweils den Zeigern Z1 und Z4 zugeordneten Schaltzustände der IGBTs 2a bis 2f (S1 - S6) sind ebenfalls in der Figur 5 wiedergegeben (links unten und rechts oben).

Immer dann, wenn der Zeiger Z1 aktiv wird, wird ein Speicher gesetzt. Wenn Zeiger Z4 aktiv wird, wird dieser Speicher zurückgesetzt. Ob die Zeiger Z1 und Z4 beteiligt sind, wird anhand der Schaltzustände der IGBTs 2a bis 2f abgefragt, wie in der Figur 4 allgemein und der Figur 5 für die Zeiger Z1 und Z4 gezeigt. Das Setzen und Zurücksetzen des Speichers definiert eine Schaltgerade 9, die die Bereiche in der Sollspannungsraumdarstellung trennt, in denen jeweils einer der um 180 Grad entgegen gesetzten Spannungsraumzeiger Z1 (1) und Z4 (4) zur Bildung des resultierenden Sollspannungsraumzeigers aktiv wird (also den Bereich, in dem der Speicher gesetzt ist, von dem Bereich, in dem der Speicher nicht gesetzt ist). Bei einer Ständerfrequenz von f₁ gleich konstant wird so, wie in der Figur 5 gezeigt, alle 180 Grad der Speicher gesetzt bzw. zurückgesetzt.

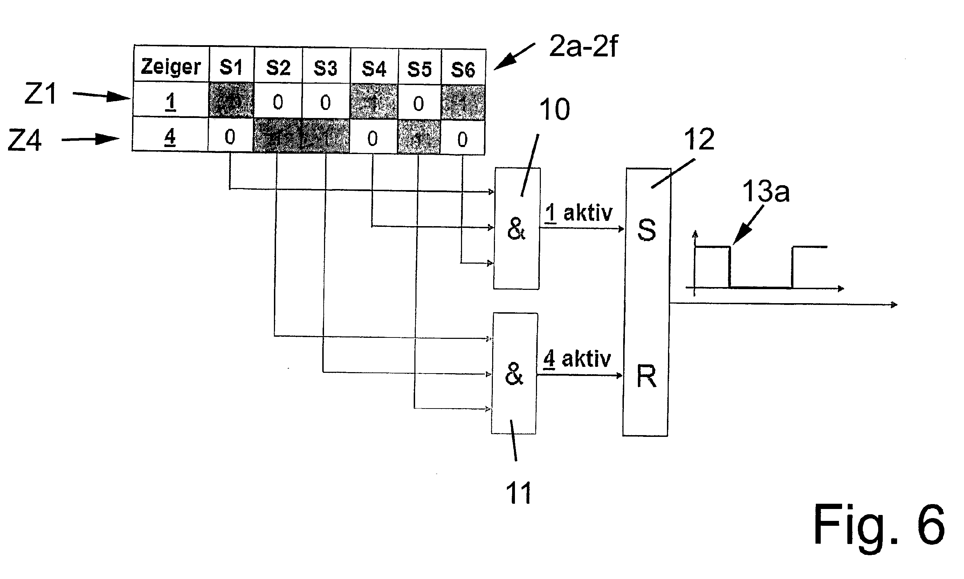

Figur 6 zeigt eine Darstellung zur logikbasierten Auswertung der Ansteuersignale im Rahmen des erfindungsgemäßen Verfahrens, wobei oben links in der Darstellung der Figur 6 die Schaltzustände der IGBTs 2a bis 2f (S1 bis S6) für die Zeiger Z1 (1) und Z4 (4) gezeigt sind. Die Bedingungen zum Setzen und Rücksetzen des Speichers werden durch Logik gebildet, wobei die unmittelbare Auswertung der Schaltsignale durch die beiden &-Gatter 10 (für die Bestimmung Z1 aktiv) und 11 (für Z4 aktiv) vorgenommen wird. Gemäß dem Kästchen 12 erfolgt dann jeweils ein Setzen (S) sowie Rücksetzen (R) des Speichers. Der resultierende Signalverlauf ist mit den Bezugszeichen 13a bezeichnet. Es handelt sich um ein Binärsignal bzw. ein Signal mit einer Rechteckform.

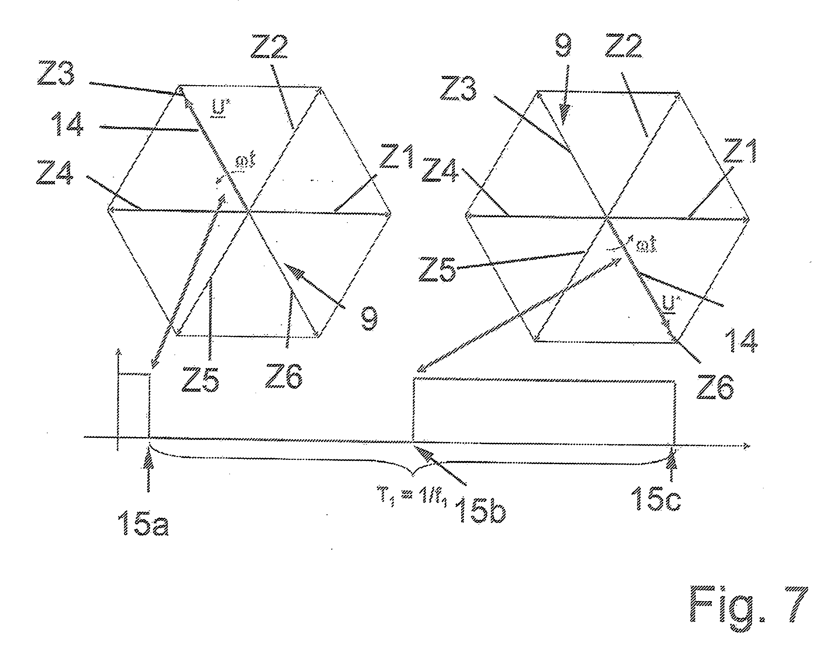

Die Figur 7 zeigt eine umfangreichere Darstellung des sich aus dem Überschreiten der Schaltgeraden 9 durch den resultierenden Sollspannungsraumzeiger 14 (U*) ergebenden Ansteuersignalverlaufs 13a. Beim Aktivwerden des Zeigers Z4 (4) wird der Speicher zurückgesetzt. Die Signalhöhe bzw. der Signalbetrag im Signalverlauf 13a fällt beim Erreichen der entsprechenden Zeitkoordinate 15a auf der Zeitachse auf Null ab. Beim zweiten Überschreiten der Schaltgeraden 9 wird der Speicher erneut gesetzt, da der Zeiger Z1 (1) aktiv wird. Das Signal steigt an dieser Stelle im Signalverlauf 13a, die der Zeitkoordinate 15b zugeordnet ist, auf einen positiven Wert bzw. einen Betrag ungleich 0 an. Aus dem Signalverlauf 13a, der einem binären Rechtecksignal entspricht, lässt sich die Periodendauer T₁ ableiten, die dem Kehrwert der Frequenz f₁ entspricht. Die Periodendauer T₁ für das Ständerdrehfeld ist hier als die Dauer zwischen dem ersten Abfallen des Signals zur Zeitkoordinaten 15b und dem zweiten, erneuten Abfallen des Signals zur Zeitkoordinaten 15c dargestellt.

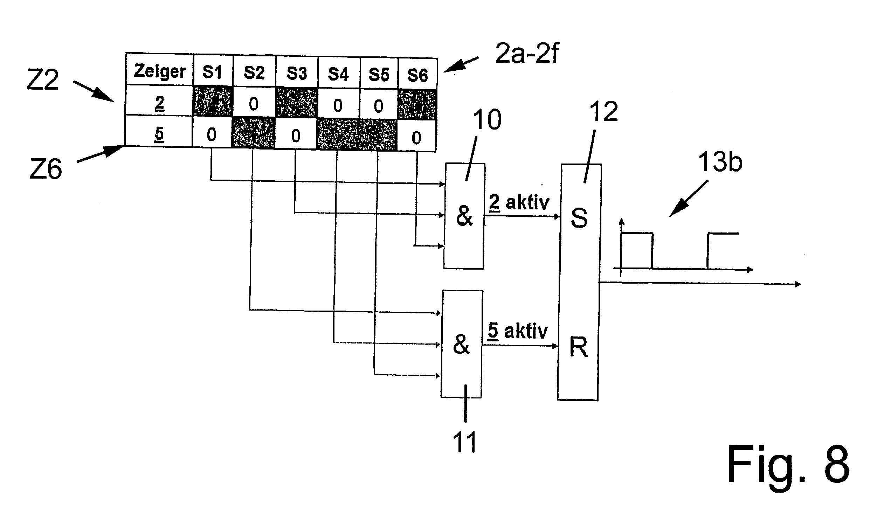

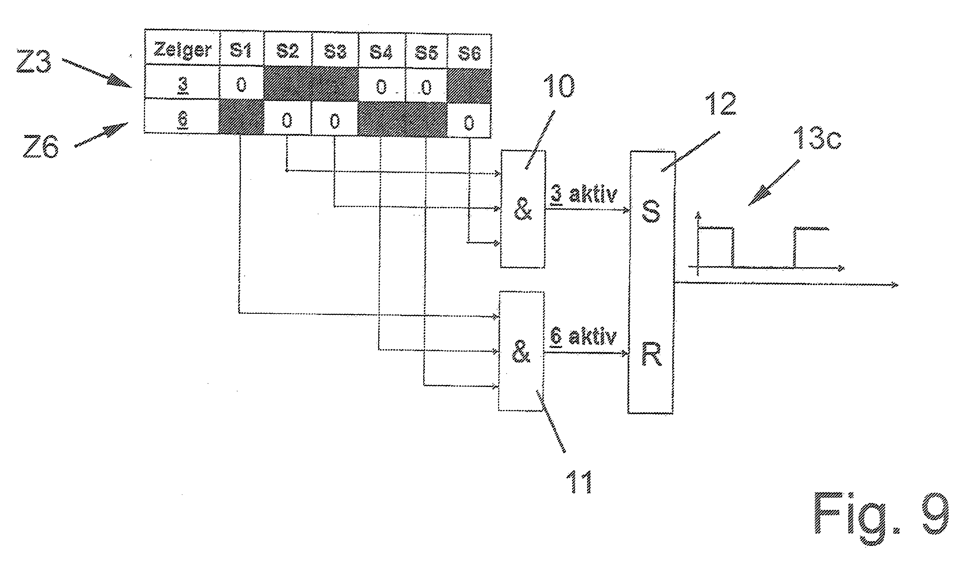

In den Figuren 8 und 9 sind Darstellungen der logikbasierten Auswertung der Ansteuersignale bei Abfrage der Zeiger Z2 (2) und Z5 (5) (Figur 8) sowie der Zeiger Z3 (3) und Z6 (6) (Figur 9) gezeigt. Durch die Auswertung weiterer Zeigerpaare bzw. die Betrachtung weiterer Schaltgeraden können zusätzlich Signalverläufe 13b, 13c erhalten werden, wenn die Drehrichtung des Ständerdrehfeldes ergänzend zur Periodendauer bestimmt werden soll. Selbstverständlich können aber diese anderen Zeigerpaare auch alternativ zum Zeigerpaar Z1, Z4 betrachtet werden. Wie in der Figur 6 erfolgt die Auswertung der Tabellen für die Schaltzustände der IGBTs 2a bis 2f (S1 bis S6) für die Zeiger Z2 und Z5 (2 und 5) bzw. für die Zeiger Z3 und Z6 (3 und 6) über &-Gatter, die hier zur Vereinfachung mit den gleichen Bezugszeichen 10 und 11 wie in der Figur 6 bezeichnet sind. Bei der Figur 8 wird beim Aktivwerden des Zeigers Z2 (2) der Speicher gesetzt, der dann beim Aktivwerden des Zeigers Z5 (5) zurückgesetzt wird. Der sich ergebende Signalverlauf ist der Signalverlauf 13b. Entsprechend wird gemäß der Figur 9 beim Aktivwerden des Zeigers Z3 (3) ein Speicher gesetzt, der beim Aktivwerden des Zeigers Z6 (6) zurückgesetzt wird, so dass sich der Signalverlauf 13c ergibt. Die entsprechenden Schaltgeraden sind gegenüber der Schaltgeraden 9 der Figuren 5 und 7 um 60 Grad bzw. 120 Grad verschoben.

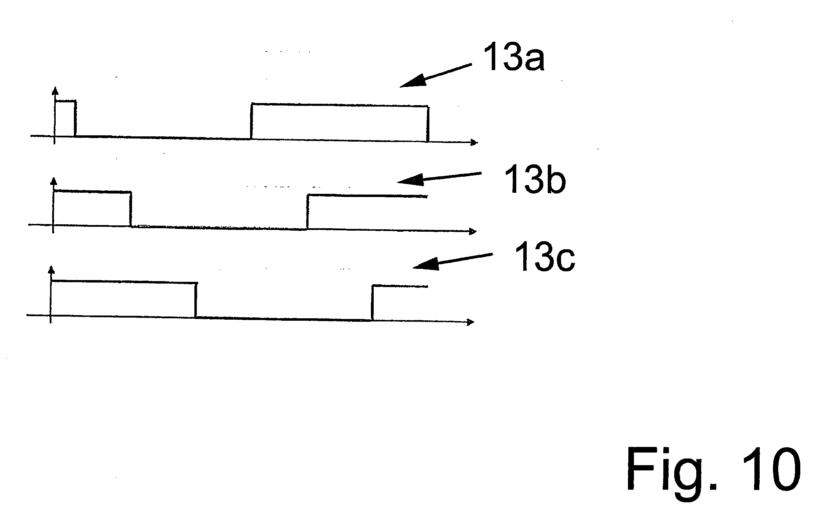

In der Figur 10 ist eine gemeinsame Darstellung der drei gemäß den Figuren 6, 8 und 9 ermittelten phasenverschobenen binären Ansteuersignale 13a, 13b, 13c gezeigt. Um abschließend die Drehfeldfrequenz zu ermitteln, bieten sich zwei unterschiedliche Herangehensweisen an. Einerseits ist es möglich, die Flanken der drei erzeugten Rechtecksignale bzw. Signalverläufe 13a, 13b und 13c innerhalb eines festen Zeitintervalls zu zählen. Andererseits ist es möglich, eine Zeitmessung zwischen zwei Flanken der drei erzeugten Rechtecksignale der Signalverläufe 13a, 13b und 13c durchzuführen, die 60 elektrischen Grad entspricht. Die erste Variante ist bei höheren Drehzahlen der Maschine zu bevorzugen, die zweite bei niedrigeren Drehzahlen. Werden alle drei Signalverläufe 13a, 13b und 13c bzw. die entsprechend generierten Binärsignale berücksichtigt, so liegt alle 60 Grad eine Information vor. Bei einer Beschränkung auf nur eines dieser Signale würde nur alle 180 Grad eine Information erhalten. Die Verwendung aller drei Signalverläufe 13a, 13b und 13c führt somit zu einer Verdreifachung der Auflösung.

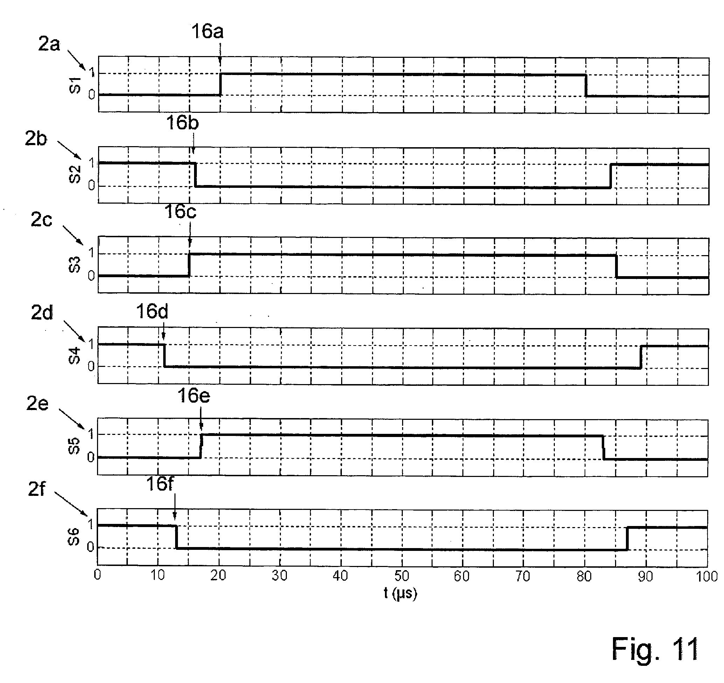

Die Figur 11 zeigt eine Darstellung zur im Rahmen der Erfindung zu berücksichtigenden Verriegelungszeit, wobei für die IGBTs S1 bis S6 jeweils die Schaltzustände (0 oder 1) gegenüber der Zeit t in Mikrosekunden aufgetragen sind. Die Darstellung bezieht sich auf eine Drehzahl von 30 Umdrehungen pro Minute (min⁻¹) und eine Zwischenkreisfrequenz U_{ZK} von 565 Volt. In den Umrichtern sind Verriegelungszeiten implementiert, die Totzeiten des Systems darstellen. In der Darstellung sind die Zeitkoordinaten der in der Darstellung ersten Ein-/Ausschaltvorgänge der IGBTs 2a bis 2f mit 16a bis 16f bezeichnet.

Sinn der Verriegelungszeiten ist es sicherzustellen, dass in einem Zweig des Pulswechselrichters gemäß der Figur 1 niemals beide IGBTs gleichzeitig eingeschaltet sind und sich damit im leitenden Zustand befinden. Beim Ausschalten eines IGBT, beispielsweise des IGBT 2b (S2) in Figur 1 und 11 wird der IGBT 2a (S1) nicht sofort (zur Zeit 16b) eingeschaltet, sondern erst mit einer Verspätung, beispielsweise nach Ablauf einer Verriegelungszeit von einigen Mikrosekunden, zur Zeit 16a. Im Fall der Figur 11 entspricht die Verriegelungszeit vier Mikrosekunden. Entsprechend wird nach dem Ausschalten von S1 der IGBT S2 erst vier Mikrosekunden später wieder eingeschaltet. Analoge Verriegelungszeiten sind für die IGBT-Paare in den anderen Zweigen vorgesehen. Die spezifischen Schaltmuster, die sich mit den Verriegelungszeiten ergeben, könnten von der zuvor beschriebenen Auswertelogik nicht detektiert werden. Deshalb wird für die Auswertung eine Korrektur dahingehend vorgenommen, dass beim Ausschalten des IGBT 2a (S1) das Logiksignal für 2b (S2) automatisch auf einen Hochpegelzustand (ein HIGH) gesetzt wird. Der Messwert des Ansteuersignals würde dagegen erst nach Ablauf der Totzeit auf den Hochpegelwert gehen, was den Ablauf der Drehfeldfrequenzbestimmung stören würde. Die Rekonstruktion des ohne Verriegelung gültigen Pulsmusters dient nur zur Drehfeldfrequenzermittlung. Selbstverständlich handelt es sich bei diesem rekonstruierten Pulsmuster nicht um das Pulsmuster, das über die Treiber an das Leistungsteil herauszugeben ist.

### Bezugszeichen

1 Ansteuerschalteinrichtung
2a, 2b, 2c, 2d, 2e, 2f IGBTs bzw. Schaltelemente (auch mit S1 bis S6 bezeichnet)
3 Synchron- bzw. Asynchronmaschine
4a, 4b, 4c Motorwicklungen
5a, 5b, 5c, 5d, 5e, 5f Freilaufdioden (auch mit D1 bis D6 bezeichnet)
6 Ansteuerelektronik
7 Gleichspannungszwischenkreis
8a, 8b, 8c, 8d, 8e, 8f Sektoren Spannungsraumzeigerdarstellung (auch mit I bisVI bezeichnet)
9 Schaltgerade
10 &-Gatter
11 &-Gatter
12 Kästchen
13a, 13b, 13c resultierender Signalverlauf, Rechteck-/ Binärsignal
14 resultierender Sollspannungsraumzeiger
15a, 15b, 15c Zeitkoordinaten im Signalverlauf
16a, 16b, 16c, 16d, 16e, 16f Ein-/Ausschaltzeiten IGBTs bzw. Schaltelemente
Z1, Z2, Z3, Z4, Z5, Z6, Z7, Z8 Spannungsraumzeiger (auch mit 1 bis 8 bezeichnet)
a, b, c Raumachsen
i_{U}, iᵥ, i_{w} Ströme
S Setzen Speicher
R Rücksetzen Speicher
t Zeit
U, V, W Spannungen
u_{U}, uᵥ, u_{w} zeitlich veränderliche Spannungen
U_{ZK} Zwischenkreisspannung
U* resultierender Sollspannungsraumzeiger
α, β Achsen Stator-/ Ständerkoordinatensystem

## Patentansprüche

1. Verfahren zur Ermittlung der elektrischen Ständerdrehfeldfrequenz und/oder der Drehrichtung des Ständerdrehfeldes einer Synchron- oder Asynchronmaschine (3), die mittels einer Ansteuerschalteinrichtung (1) mit wenigstens einem Schaltelement (2a - 2f) angesteuert wird, wobei die elektrische Ständerdrehfeldfrequenz und/oder die Drehrichtung des Ständerdrehfeldes ausschließlich mittels der Ansteuersignale für das eine oder die mehreren Schaltelemente (2a - 2f) der Ansteuerschalteinrichtung (1) ermittelt werden, **dadurch gekennzeichnet, dass** im Rahmen der Ermittlung der elektrischen Ständerdrehfeldfrequenz und/oder der Drehrichtung des Ständerdrehfeldes der Synchron- oder Asynchronmaschine (3) die Periodendauer zur Ständerdrehfeldfrequenz mittels einer Schaltgeraden (9) bestimmt wird, deren Verlauf in einer Sollspannungsraumzeigerdarstellung das Aktivwerden jeweils eines von zwei um 180° entgegen gesetzten Spannungsraumzeigern (Z1 und Z4; Z2 und Z5; Z3 und Z6) zur Bildung eines resultierenden Sollspannungsraumzeigers (14) bezeichnet, wobei jeweils bei Beginn der Beteiligung des einen Spannungsraumzeigers (Z1 - Z3) an der Bildung des resultierenden Sollspannungsraumzeigers (14) ein Speicher gesetzt wird (S), der zurückgesetzt wird (R), wenn die Beteiligung des um 180° entgegen gesetzten Spannungsraumzeigers (Z4 - Z6) einsetzt.

2. Verfahren nach Anspruch 1, **dadurch gekennzeichnet, dass** die Ansteuersignale für das eine oder die mehreren Schaltelemente (2a - 2f) seitens einer Ansteuerelektronik (6) erzeugt und/oder unter Verwendung eines Modells oder einer Darstellung mit wenigstens einem Spannungsraumzeiger (Z1 - Z8) und/oder wenigstens einem resultierenden Sollspannungsraumzeiger (14) ausgewertet werden.

3. Verfahren nach Anspruch 2, **dadurch gekennzeichnet, dass** der oder die Spannungsraumzeiger (Z1 - Z8) und/oder der resultierende Sollspannungsraumzeiger (14) im Rahmen einer Stromregelung und/oder Spannungs-/Frequenzsteuerung ermittelt werden.

4. Verfahren nach einem der vorangehenden Ansprüche, **dadurch gekennzeichnet, dass** als wenigstens ein Schaltelement (2a - 2f) der Ansteuerschalteinrichtung (1) ein Halbleiterschaltelement (2a - 2f) verwendet wird oder dass ausschließlich Halbleiterschaltelemente (2a - 2f) als Schaltelemente (2a - 2f) der Ansteuerschalteinrichtung (1) verwendet werden, insbesondere Bipolartransistoren mit isolierter Gate-Elektrode (IGBTs, 2a - 2f).

5. Verfahren nach einem der vorangehenden Ansprüche, **dadurch gekennzeichnet, dass** als Ansteuerschalteinrichtung (1) wenigstens ein Wechselrichter verwendet wird, insbesondere ein dreiphasiger Wechselrichter und/oder ein Pulswechselrichter und/oder ein Wechselrichter mit Bipolartransistoren mit isolierter Gate-Elektrode (2a - 2f) und jeweils zugeordneten Freilaufdioden (5a - 5f) und/oder ein Zweipunktwechselrichter und/oder ein von einem Gleichspannungszwischenkreis (7) gespeister und/oder eine dreiphasige Last antreibender Wechselrichter.

6. Verfahren nach einem der vorangehenden Ansprüche, **dadurch gekennzeichnet, dass** es im Fall eines Zweipunktwechselrichters mit sechs Sektoren (8a - 8f) in der Sollspannungsraumzeigerdarstellung als Ansteuerschalteinrichtung (1) durchgeführt wird.

7. Verfahren nach einem der vorhergehenden Ansprüche, **dadurch gekennzeichnet, dass** die Beteiligung der beiden entgegen gesetzten Spannungsraumzeiger (Z1 und Z4; Z2 und Z5; Z3 und Z6) an der Bildung des resultierenden Sollspannungsraumzeigers (14) mittels der Schaltzustände der Schaltelemente (2a - 2f) der Ansteuerschalteinrichtung (1), insbesondere des Zweipunktwechselrichters, ermittelt wird, wobei die Bedingungen zum Setzen (S) und Zurücksetzen (R) des Speichers logikbasiert ermittelt werden.

8. Verfahren nach einem der vorangehenden Ansprüche, **dadurch gekennzeichnet, dass** die Drehrichtung des Ständerdrehfeldes, insbesondere im Fall eines Zweipunktwechselrichters mit sechs Sektoren (8a - 8f) in einer Sollspannungsraumzeigerdarstellung als Ansteuerschalteinrichtung (1), mittels wenigstens einer, insbesondere wenigstens einer weiteren, Schaltgeraden in der Sollspannungsraumzeigerdarstellung bestimmt wird, insbesondere mittels einer weiteren Schaltgeraden, die gegenüber einer Schaltgeraden (9) zur Bestimmung der Periodendauer zur Ständerdrehfeldfrequenz um 60° oder 120° verschoben ist.

9. Verfahren nach einem der vorangehenden Ansprüche, **dadurch gekennzeichnet, dass** die Ständerdrehfeldfrequenz des elektrischen Feldes, insbesondere im Fall eines Zweipunktwechselrichters mit sechs Sektoren (8a - 8f) in einer Sollspannungsraumzeigerdarstellung als Ansteuerschalteinrichtung (1), mittels Zählung der Flanken der sich durch das Überschreiten einer Schaltgeraden durch den resultierenden Sollspannungsraumzeiger ergebenden Rechteck- oder Binärsignale (13a, 13b, 13c) innerhalb eines festen Zeitintervalls und/oder durch Zeitmessung zwischen zwei Flanken der sich durch das Überschreiten einer Schaltgeraden durch den resultierenden Sollspannungsraumzeiger ergebenden Rechteck- oder Binärsignale (13a, 13b, 13c) ermittelt wird.

10. Verfahren nach einem der Ansprüche 6 bis 10, **dadurch gekennzeichnet, dass** im Fall eines Zweipunktwechselrichters mit sechs Sektoren (8a - 8f) in einer Sollspannungsraumzeigerdarstellung als Ansteuerschalteinrichtung (1) alle drei sich durch Überschreiten der jeweiligen Schaltgeraden durch den resultierenden Sollspannungsraumzeiger ergebenden Rechteck- oder Binärsignale zur Ermittlung der Ständerdrehfeldfrequenz des elektrischen Feldes verwendet werden.

11. Verfahren nach einem der vorangehenden Ansprüche, **dadurch gekennzeichnet, dass** im Rahmen des Verfahrens zur Ermittlung der elektrischen Ständerdrehfeldfrequenz und/oder der Drehrichtung des Ständerdrehfeldes einer Synchron- oder Asynchronmaschine (3) eine in der Ansteuerschalteinrichtung (1) implementierte Verriegelungszeit berücksichtigt wird.

12. Verfahren nach einem der vorangehenden Ansprüche, **dadurch gekennzeichnet, dass** die elektrische Ständerdrehfeldfrequenz und/oder Drehrichtung des Ständerdrehfeldes der Synchron- oder Asynchronmaschine (3) im stationären Zustand und/oder zur Überprüfung und/oder Plausibilisierung der Signale wenigstens eines Sensor- und/oder Geberelements ermittelt wird.

13. Vorrichtung, ausgebildet zur Ermittlung der elektrischen Ständerdrehfeldfrequenz und/oder der Drehrichtung des Ständerdrehfeldes einer Synchron- oder Asynchronmaschine (3), wobei die Synchron- oder Asynchronmaschine (3) mittels einer Ansteuerschalteinrichtung (1) mit wenigstens einem Schaltelement (2a - 2f) ansteuerbar ist, insbesondere Vorrichtung, die zur Ermittlung der elektrischen Ständerdrehfeldfrequenz und/oder der Drehrichtung des Ständerdrehfeldes gemäß einem Verfahren nach einem der vorangehenden Ansprüche ausgebildet ist, **dadurch gekennzeichnet, dass** die Vorrichtung zur Ermittlung der elektrischen Ständerdrehfeldfrequenz und/oder der Drehrichtung des Ständerdrehfeldes ausschließlich mittels der seitens einer Ansteuerelektronik (6) bereitgestellten Ansteuersignale für das eine oder die mehreren Schaltelemente (2a - 2f) der Ansteuerschalteinrichtung (1) derart ausgebildet ist, dass im Rahmen der Ermittlung der elektrischen Ständerdrehfeldfrequenz und/oder der Drehrichtung des Ständerdrehfeldes der Synchron- oder Asynchronmaschine (3) die Periodendauer zur Ständerdrehfeldfrequenz mittels einer Schaltgeraden (9) bestimmt wird, deren Verlauf in einer Sollspannungsraumzeigerdarstellung das Aktivwerden jeweils eines von zwei um 180° entgegen gesetzten Spannungsraumzeigern (Z1 und Z4; Z2 und Z5; Z3 und Z6) zur Bildung eines resultierenden Sollspannungsraumzeigers (14) bezeichnet, und dass jeweils bei Beginn der Beteiligung des einen Spannungsraumzeigers (Z1 - Z3) an der Bildung des resultierenden Sollspannungsraumzeigers (14) ein Speicher gesetzt wird (S), der zurückgesetzt wird (R), wenn die Beteiligung des um 180° entgegen gesetzten Spannungsraumzeigers (Z4 - Z6) einsetzt.

14. Synchron- oder Asynchronmaschine (3), **dadurch gekennzeichnet, dass** der Synchron- oder Asynchronmaschine (3) eine Vorrichtung nach Anspruch 13 zugeordnet ist.

## Claims

1. A method for determining the electric stator rotating field frequency and/or the rotational direction of the stator rotating field of a synchronous or asynchronous machine (3) which is controlled by means of a control switching device (1) comprising at least one switching element (2a - 2f), the electric stator rotating field frequency and/or the rotational direction of the stator rotating field being determined exclusively by means of the control signals for the one or more switching elements (2a - 2f) of the control switching device (1), **characterised in that** within the framework of determining the electric stator rotating field frequency and/or the rotational direction of the stator rotating field of the synchronous or asynchronous machine (3) the period duration to the stator rotating field frequency is determined by means of a switching straight line (9) the extension of which in a target voltage space indicator representation indicates that a respective one of two voltage space indicators (Z1 and Z4; Z2 and Z5; Z3 and Z6) opposed to one another by 180° has become active in order to form a resulting target voltage space indicator (14), a memory being set (S) respectively at the start of the involvement of the one voltage space indicator (Z1 - Z3) in the formation of the resulting target voltage space indicator (14), said memory being re-set (R) when the involvement of the voltage space indicator (Z4 - Z6) opposed by 180° starts.

2. The method according to Claim 1, **characterised in that** the control signals for the one or more switching elements (2a - 2f) are generated by a control electronic circuit (6) and/or are evaluated using a model or a representation with at least one voltage space indicator (Z1 - Z8) and/or at least one resulting target voltage space indicator (14).

3. The method according to Claim 2, **characterised in that** the voltage space indicator or indicators (Z1 - Z8) and/or the resulting target voltage space indicator (14) is determined within the framework of current regulation and/or voltage/frequency control.

4. The method according to any of the preceding claims, **characterised in that** a semiconductor switching element (2a - 2f) is used as at least one switching element (2a - 2f) of the control switching device (1) or that only semiconductor switching elements (2a - 2f) are used as switching elements (2a - 2f) of the control switching device (1), in particular biopolar transistors with an insulated gate electrode (IGBTs, 2a - 2f).

5. The method according to any of the preceding claims, **characterised in that** at least one inverter is used as a control switching device (1), in particular a three-phase inverter and/or a pulse inverter and/or an inverter with bipolar transistors with an insulated gate electrode (2a - 2f) and respectively assigned free-wheeling diodes (5a - 5f) and/or a two-point inverter and/or an inverter fed by an intermediate DC circuit (7) and/or an inverter driving a three-phase load.

6. The method according to any of the preceding claims, **characterised in that** in the case of a two-point inverter with six sectors (8a - 8f) in the target voltage space indicator representation it is implemented as a control switching device (1).

7. The method according to any of the preceding claims, **characterised in that** the involvement of the two opposing voltage space indicators (Z1 and Z4; Z2 and Z5; Z3 and Z6) in the formation of the resulting target voltage space indicator (14) is determined by means of the switching states of the switching elements (2a - 2f) of the control switching device (1), in particular of the two-point inverter, the conditions for setting (S) and re-setting (R) the memory being determined on the basis of logic.

8. The method according to any of the preceding claims, **characterised in that** the rotational direction of the stator rotating field, in particular in the case of a two-point inverter with six sectors (8a - 8f) in a target voltage space indicator representation as a control switching device (1), is determined by means of at least one, in particular at least one additional switching straight line, in the target voltage space indicator representation, in particular by means of an additional switching straight line which is shifted by 60° or 120° with respect to a switching straight line (9) in order to determine the period duration to the stator rotating field frequency.

9. The method according to any of the preceding claims, **characterised in that** the stator rotating field frequency of the electric field, in particular in the case of a two-point inverter with six sectors (8a - 8f) in a target voltage space indicator representation as a control switching device (1) is determined by counting the flanks of the rectangular or binary signals (13a, 13b, 13c) produced by the resulting target voltage space indicator exceeding a switching straight line within a fixed interval of time and/or by measuring the time between two flanks of the rectangular and or binary signals (13a, 13b, 13c) produced by the resulting target voltage space indicator exceeding a switching straight line.

10. The method according to any of Claims 6 to 10, **characterised in that** in the case of a two-point inverter with six sectors (8a - 8f) in a target voltage space indicator representation as the control switching device (1) all three of the rectangular or binary signals produced by the resulting target voltage space indicator exceeding the respective switching straight line are used to determine the stator rotating field frequency of the electric field.

11. The method according to any of the preceding claims, **characterised in that** a locking time implemented in the control switching device (1) is taken into account within the framework of the method for determining the electric stator rotating field frequency and/or the rotational direction of the stator rotating field of a synchronous or asynchronous machine (3).

12. The method according to any of the preceding claims, **characterised in that** the electric stator rotating field frequency and/or the rotational direction of the stator rotating field of the synchronous or asynchronous machine (3) is determined in the stationary state and/or for checking and/or making plausible the signals of at least one sensor and/or transmitter element.

13. An apparatus, designed to determine the electric stator rotating field frequency and/or the rotational direction of the stator rotating field of a synchronous or asynchronous machine (3), the synchronous or asynchronous machine (3) being controllable by means of a control switching device (1) having at least one switching element (2a - 2f), in particular an apparatus which is designed to determine the electric stator rotating field frequency and/or the rotational direction of the stator rotating field according to a method according to any of the preceding claims, **characterised in that** the apparatus for determining the electric stator rotating field frequency and/or the rotational direction of the stator rotating field is designed exclusively by means of the control signals provided by a control electronic circuit (6) for the one or more switching elements (2a - 2f) of the control switching device (1) such that within the framework of determining the electric stator rotating field frequency and/or the rotational direction of the stator rotating field of the synchronous or asynchronous machine (3) the period duration to the stator rotating field frequency is determined by means of a switching straight line (9) the extension of which in a target voltage space indicator representation indicates that the respective one of two voltage space indicators (Z1 and Z4; Z2 and Z5; Z3 and Z6) opposing one another by 180° have become active in order to form a resulting target voltage space indicator (14), and that respectively at the start of the involvement of the one voltage space indicator (Z1 - Z3) in the formation of the resulting target voltage space indicator (14) a memory is set (S), which memory is re-set (R) when the involvement of the voltage space indicator (Z4 - Z6) opposing by 180° starts.

14. A synchronous or asynchronous machine (3), **characterised in that** an apparatus according to Claim 13 is assigned to the synchronous or asynchronous machine (3).

## Revendications

1. Procédé de détermination de la fréquence statorique de champ électromagnétique et/ou du sens de rotation du champ magnétique d'une machine synchrone ou asynchrone (3) qui est commandée à l'aide d'un dispositif de commande (1) comportant au moins un élément de commutation (2a - 2f), dans lequel la fréquence statorique de champ électromagnétique et/ou le sens de rotation du champ magnétique sont déterminés exclusivement à l'aide des signaux de commande desdits un ou plusieurs éléments de commutation (2a - 2f) du dispositif de commande (1), **caractérisé en ce que**, dans le cadre de la détermination de la fréquence statorique de champ électromagnétique et/ou du sens de rotation du champ magnétique de la machine synchrone ou asynchrone (3), la durée de période de la fréquence statorique de champ électromagnétique est déterminée à l'aide d'une droite de commutation (9) dont le tracé, dans une représentation de vecteurs spatiaux de tension de consigne, indique que respectivement l'un de deux vecteurs spatiaux de tension (Z1 et Z4 ; Z2 et Z5 ; Z3 et Z6) opposés de 180°C devient actif pour former un vecteur spatial de tension de consigne (14) résultant, et dans lequel respectivement au début de la participation de l'un des vecteurs spatiaux de tension (Z1- Z3) à la formation du vecteur spatial de tension de consigne (14) résultant est activée (S) une mémoire, laquelle est réinitialisée (R) lorsque débute la participation du vecteur spatial de tension (Z4 - Z6) opposé de 180°.

2. Procédé selon la revendication 1, **caractérisé en ce que** les signaux de commande desdits un ou plusieurs éléments de commutation (2a - 2f) sont générés par une électronique' de commande (6) et/ou évalués en utilisant un modèle ou une représentation comportant au moins un vecteur spatial de tension (Z1 - Z8) et/ou au moins un vecteur spatial de tension de consigne (14) résultant.

3. Procédé selon la revendication 2, **caractérisé en ce que** le ou les vecteurs spatiaux de tension (Z1 - Z8) et/ou le vecteur spatial de tension de consigne (14) résultant sont déterminés dans le cadre d'une régulation de courant et/ou d'une commande de tension/fréquence.

4. Procédé selon l'une des revendications précédentes, **caractérisé en ce qu'**on utilise en tant qu'au moins un élément de commutation (2a - 2f) du dispositif de commande (1) un élément de commutation à semi-conducteur (2a - 2f) ou **en ce qu'**on utilise comme éléments de commutation (2a - 2f) du dispositif de commande (1) exclusivement des éléments de commutation à semi-conducteur (2a - 2f), en particulier des transistors bipolaires à électrode de grille isolée (IGBTs, 2a - 2f).

5. Procédé selon l'une des revendications précédentes, **caractérisé en ce qu'**on utilise comme dispositif de commande (1) au moins un onduleur, en particulier un onduleur triphasé et/ou un onduleur à impulsions et/ou un onduleur à transistors bipolaires à électrode de grille isolée (2a - 2f) et à diodes de roue libre (5a - 5f) associées respectivement et/ou un onduleur à deux niveaux et/ou un onduleur alimenté par un circuit intermédiaire à tension continue (7) et/ou un onduleur entraînant une charge triphasée.

6. Procédé selon l'une des revendications précédentes, **caractérisé en ce qu'**il est réalisé dans le cas d'un onduleur à deux niveaux comportant six secteurs (8a - 8f) dans la représentation de vecteurs spatiaux de tension de consigne en tant que dispositif de commande (1).

7. Procédé selon l'une des revendications précédentes, **caractérisé en ce que** la participation des deux vecteurs spatiaux de tension opposés (Z1 et Z4 ; Z2 et Z5 ; Z3 et Z6) à la formation du vecteur spatial de tension de consigne (14) résultant est déterminée à l'aide des états de commutation des éléments de commutation (2a - 2f) du dispositif de commande (1), en particulier de l'onduleur à deux niveaux, la détermination des conditions d'activation (S) et de réinitialisation (R) de la mémoire étant basée sur la logique.

8. Procédé selon l'une des revendications précédentes, **caractérisé en ce que** le sens de rotation du champ magnétique, en particulier dans le cas d'un onduleur à deux niveaux comportant six secteurs (8a - 8f) dans une représentation de vecteurs spatiaux de tension de consigne en tant que dispositif de commande (1), est déterminé à l'aide d'au moins une, en particulier au moins une autre droite de commutation dans la représentation de vecteurs spatiaux de tension de consigne, en particulier à l' aide d'une autre droite de commutation qui est décalée de 60° ou 120° par rapport à une droite de commutation (9) destinée à la détermination de la durée de période de la fréquence statorique de champ électromagnétique.

9. Procédé selon l'une des revendications précédentes, **caractérisé en ce que** la fréquence statorique du champ électromagnétique, en particulier dans le cas d'un onduleur à deux niveaux comportant six secteurs (8a - 8f) dans une représentation de vecteurs spatiaux de tension de consigne en tant que dispositif de commande (1), est déterminée par comptage des fronts des signaux rectangulaires ou binaires (13a, 13b, 13c) résultant du dépassement d'une droite de commutation par le vecteur spatial de tension de consigne résultant à l'intérieur d'un intervalle de temps fixe, et/ou par mesure du temps entre deux fronts des signaux rectangulaires ou binaires (13a, 13b, 13c) résultant du dépassement d'une droite de commutation par le vecteur spatial de tension de consigne résultant.

10. Procédé selon l'une des revendications 6 à 10, **caractérisé en ce que**, dans le cas d'un onduleur à deux niveaux comportant six secteurs (8a - 8f) dans une représentation de vecteurs spatiaux de tension de consigne en tant que dispositif de commande (1), on utilise les trois signaux rectangulaires ou binaires résultant du dépassement d'une droite de commutation respective par le vecteur spatial de tension de consigne résultant pour déterminer la fréquence statorique de champ électromagnétique.

11. Procédé selon l'une des revendications précédentes, **caractérisé en ce que**, dans le cadre du procédé de détermination de la fréquence statorique de champ électromagnétique et/ou du sens de rotation du champ magnétique d'une machine synchrone ou asynchrone (3), on prend en compte un temps de verrouillage implémenté dans le dispositif de commande (1).

12. Procédé selon l'une des revendications précédentes, **caractérisé en ce que** la fréquence statorique de champ électromagnétique et/ou le sens de rotation du champ magnétique d'une machine synchrone ou asynchrone (3) est déterminé(e) à l'état stationnaire et/ou pour vérification et/ou plausibilisation des signaux d'au moins un élément détecteur et/ou capteur.

13. Dispositif conçu pour déterminer la fréquence statorique de champ électromagnétique et/ou le sens de rotation du champ magnétique d'une machine synchrone ou asynchrone (3), dans lequel la machine synchrone ou asynchrone (3) peut être commandée à l'aide d'un dispositif de commande (1) comprenant au moins un élément de commutation (2a - 2f), en particulier dispositif conçu pour déterminer la fréquence statorique de champ électromagnétique et/ou le sens de rotation du champ magnétique selon un procédé selon l'une des revendications précédentes, **caractérisé en ce que** le dispositif est réalisé pour déterminer la fréquence statorique de champ électromagnétique et/ou le sens de rotation du champ magnétique exclusivement à l'aide des signaux de commande desdits un ou plusieurs éléments de commutation (2a - 2f) du dispositif de commande (1) délivrés par une électronique de commande (6), de façon telle que, dans le cadre de la détermination de la fréquence statorique de champ électromagnétique et/ou du sens de rotation du champ magnétique de la machine synchrone ou asynchrone (3), la durée de période de la fréquence statorique de champ électromagnétique est déterminée à l'aide d'une droite de commutation (9) dont le tracé, dans une représentation de vecteurs spatiaux de tension de consigne, indique que respectivement l'un de deux vecteurs spatiaux de tension (Z1 et Z4 ; Z2 et Z5 ; Z3 et Z6) opposés de 180°C devient actif pour former un vecteur spatial de tension de consigne (14) résultant, et **en ce que** respectivement au début de la participation de l'un des vecteurs spatiaux de tension (Z1 - Z3) à la formation du vecteur spatial de tension de consigne (14) résultant est activée (S) une mémoire, laquelle est réinitialisée (R) lorsque débute la participation du vecteur spatial de tension (Z4 - Z6) opposé de 180°.

14. Machine synchrone ou asynchrone (3), **caractérisée en ce qu'**à la machine synchrone ou asynchrone (3) est associé un dispositif selon la revendication 13.
